# EUROPÄISCHE PATENTANMELDUNG

(11) **EP 4 764 758 A1**
(43) Veröffentlichungstag der Anmeldung: **24.06.2026**
(21) Anmeldenummer: 25208423.1
(22) Anmeldetag: 13.10.2025
(51) Int. Cl.: G05D 1/222, G05D 1/698, G06Q 10/04, G08G 5/00

(54) **VERFAHREN UND SYSTEM ZUR STEUERUNG VON FAHRZEUGEN, INSBESONDERE FLUGFÄHIGEN FAHRZEUGEN, UND FAHRZEUGVERBÄNDEN VON SOLCHEN FAHRZEUGEN, STEUERGERÄT, FAHRZEUG**

(30) Priorität: 20.12.2024 DE 102024004385
(71) Anmelder: MBDA Deutschland GmbH, 86529 Schrobenhausen (DE)
(72) Erfinder: GROSSMANN, Florian, 86558 Hohenwart (DE); LAMAC, Klaus, 80993 München (DE)
(74) Vertreter: Isarpatent

(57) **Zusammenfassung**

Die vorliegende Erfindung betrifft ein Verfahren (M) zur Steuerung von Fahrzeugen (120), insbesondere flugfähigen Fahrzeugen, und Fahrzeugverbänden von solchen Fahrzeugen. Dabei wird einem in einem Fahrzeug (120) implementiertem Steuergerät (100) eine Missionsspezifikation (3) mit weiteren Informationen übertragen. Das Steuergerät (100) vernetzt sich mit in der Missionsspezifikation (3) genannten weiteren Fahrzeugen (120) mit entsprechend weiteren Steuergeräten (100). Es wird ein in dem Steuergerät (100) implementierter OODA-Loop-Algorithmus (1) zur optimalen Missionszielerreichung unter Berücksichtigung der erhobenen Sensordaten und von übermittelten Sensordaten aller in der Teilnehmerliste (4) gelisteten weiteren und miteinander gekoppelten Steuergeräten (100) von Fahrzeugen (120) gestartet und ausgeführt, sodass basierend auf einem Ergebnisprozess dieses Algorithmus nachfolgende Steuerung der Fahrzeuge (120) erfolgt. Diese letzten Verfahrensschritte werden solange wiederholt, bis das Missionsziel (2) erreicht wird. Zudem wird ein entsprechendes Steuergerät (100), ein System (110) und ein Fahrzeug (120) offenbart.

## Beschreibung

### TECHNISCHES GEBIET DER ERFINDUNG

Die vorliegende Erfindung betrifft ein Verfahren und ein System zur Steuerung von Fahrzeugen, insbesondere flugfähigen Fahrzeugen, und Fahrzeugverbänden von solchen Fahrzeugen. Zudem betrifft die vorliegende Erfindung des Weiteren ein solches Steuergerät und ein entsprechendes Fahrzeug, welches wenigstens eine Sensoreinrichtung und ein mit der wenigstens einen Sensoreinrichtung gekoppeltes erfindungsgemäßes Steuergerät umfasst.

### HINTERGRUND DER ERFINDUNG

Die Koordinierung von Fahrzeugen oder Maschinen zum Zwecke der Erfüllung eines komplexen Missionsziels kann auf unterschiedliche Weise vollzogen werden. Ein zu erreichendes Missionsziel kann sich in einem einfachen Fall lediglich dadurch auszeichnen, dass gemeinsam ein bestimmter Bereich oder eine bestimmte Koordinate zu erreichen ist. Darüber hinaus kann sich aber ein zu erreichendes Missionsziel dadurch auszeichnen, dass eine in diesem bestimmten Bereich oder in dieser bestimmten Koordinate vorgegebene Mission zu erfüllen ist.

Im Falle von unbemannten Fahrzeugen oder Systemen, beispielsweise in Form von jeglichen Fluggeräten oder Flugkörpern, sind bereits die folgenden drei etablierten Steuerungsmechanismen bekannt, um vorgegebene Missionsziele zu erreichen: In einer Basisvariante ist bekannt, das schlicht ein vorgeplanter Missionsplan vorgegeben wird, sodass jede Einheit gemäß der vorgeplanten Missionsschritte seine jeweiligen Einstellungen während des gesamten Missionsplans bewirkt. So ist etwa vorher bereits bekannt, wo ein Flugkörper sich an welchem Ort und mit welcher Geschwindigkeit befindet und welche nachfolgende Ausrichtung vorgesehen ist. Auch kann dabei bereits vorgegeben sein, was der Flugkörper in einem Zielbereich bewirken oder erreichen soll.

In einer weiteren Variante ist bereits bekannt, dass mittels eines Operateurs, beispielsweise in Form eines entsprechend qualifizierten menschlichen Benutzers, ein ferngesteuerter Betrieb des Flugkörpers vorgesehen ist. Auch vergleichbare ferngesteuerte Varianten mittels dafür geeigneter Systeme sind bereits bekannt, sodass etwa eine Vielzahl von Flugkörpern in einem Verband gelenkt werden können. Solch übergeordnete Systeme können dabei ebenfalls von einem menschlichen Benutzer gesteuert werden, sodass es sich dabei auch um eine mittelbar durch das System ferngesteuerte Variante handeln kann.

In einer alternativen Variante ist zudem bereits bekannt, spezifische Führungsverfahren einzusetzen, welche dann einen oder mehrere Flugkörper leiten, eine bestimmte Verhaltensweise durchzuführen. Diese Führungsverfahren sind dabei insbesondere für UAS (UAS *= unmanned aircraft system* = unbemanntes Flugzeugsystem) für mittlere Marschphasen und Endspielszenarien vorgesehen. Dabei ist ein Teaming in der Regel nur dann möglich, wenn die Mitglieder beziehungsweise Teilnehmer des Teams aufeinander abgestimmte vorgeplante Missionspläne zur Ausführung bringen. Diese sind in Echtzeit nicht mehr veränderbar und können deshalb kaum oder sogar gar nicht auf Veränderungen, insbesondere dynamische Veränderungen in kürzester Zeit, im Einsatzgebiet reagieren.

Ferngesteuerte Teams können hingegen zwar in Echtzeit oder nahezu in Echtzeit reagieren. Hierfür ist jedoch eine einwandfreie Kommunikationsverbindung notwendig, welche typischerweise via Funkverbindungstechnologien über längere Distanzen bereitgestellt wird. Auch wird typischerweise pro Element beziehungsweise Teilnehmer des Teams ein Operateur benötigt. Deshalb sind ferngesteuerte Teams in sich verändernden, beispielsweise umkämpften Umgebungen, in denen möglicherweise zeitweise keine oder eine partiell gestörte Kommunikationsverbindung vorliegt, nicht sinnvoll und nicht vollumfänglich zufriedenstellend realisierbar.

### ZUSAMMENFASSUNG DER ERFINDUNG

Vor diesem Hintergrund ist es ein Ziel der vorliegenden Erfindung, ein Verfahren, ein Steuergerät und ein System zur Steuerung von Fahrzeugen, insbesondere flugfähigen Fahrzeugen, und Fahrzeugverbänden von solchen Fahrzeugen und auch ein Fahrzeug bereitzustellen, welche die oben genannten Nachteile zumindest teilweise überkommen.

Diese Aufgabe wird durch ein Verfahren mit den Merkmalen des Anspruchs 1, durch ein Steuergerät mit den Merkmalen des Anspruchs 13 und einem System mit den Merkmalen des Anspruchs 14 und einem Fahrzeug mit den Merkmalen des Anspruchs 15 gelöst.

Gemäß der Erfindung ist ein Verfahren zur Steuerung von Fahrzeugen, insbesondere flugfähigen Fahrzeugen, und Fahrzeugverbänden von solchen Fahrzeugen vorgesehen, welches die folgenden Schritte umfasst: Zunächst wird ein Steuergerät zur Steuerung eines Fahrzeugs, in welchem dieses Verfahren implementiert ist, gestartet. Von diesem Steuergerät wird eine Missionsspezifikation mit zumindest einem Missionsziel, einer Teilnehmerliste von Fahrzeugen und von zumindest einer Spielregel zur Erfüllung des Missionsziels entgegengenommen. Es wird das Fahrzeug, in welchem das Steuergerät implementiert ist, gestartet. Zudem werden erste mittels des Steuergeräts ausgelöste Steuerungsabläufe zur Erfüllung des Missionsziels basierend auf der zumindest einen Missionsspezifikation des Missionsziels und der zumindest einen Spielregel gestartet. Es wird zudem eine Kommunikationsroutine mit allen in der Teilnehmerliste gelisteten weiteren Steuergeräten von Fahrzeugen, in welchem dieses Verfahren ebenfalls vorhanden und aktiviert ist, aufgebaut. Es werden Sensordaten von mit dem Steuergerät gekoppelten Sensoreinrichtungen des Fahrzeugs erhoben. Es wird ein in dem Steuergerät implementierter OODA-Loop-Algorithmus zur Missionszielerreichung unter Berücksichtigung der erhobenen Sensordaten und von übermittelten Sensordaten aller in der Teilnehmerliste gelisteten weiteren und miteinander gekoppelten Steuergeräten von Fahrzeugen gestartet und ausgeführt. Jeweilige aktuelle Steuerungssignale werden an das Steuergerät und an alle gekoppelten Steuergeräte ausgegeben und ausgeführt, wobei sie auf einem Ergebnisprozess des OODA-Loop-Algorithmus basieren, sodass alle in der Teilnehmerliste aufgeführte Fahrzeuge mittels ihres jeweiligen Steuergeräts einen Steuerungsablauf zur effizienteren Erfüllung des Missionsziels ausführen. Die letzten drei Verfahrensschritte werden dabei wiederholt, bis das Missionsziel entweder erreicht wird oder von einem Operateur geändert wird oder sich als unerreichbar herausstellt. Im letzten Fall kann vorgesehen sein, dass die Mission dann gemäß Missionsspezifikation kontrolliert abgebrochen wird, indem beispielsweise eine eine Rückkehr zur Basis eingeleitet wird.

Weiterhin ist gemäß der Erfindung ein Steuergerät zur Steuerung eines Fahrzeugs vorgesehen, in welchem das erfindungsgemäße Verfahren implementiert ist, wobei in dem Steuergerät zumindest ein OODA-Loop-Algorithmus zur Missionszielerreichung implementiert ist.

Weiterhin ist gemäß der Erfindung ein System zur Steuerung von Fahrzeugen, insbesondere flugfähigen Fahrzeugen, und Fahrzeugverbänden von solchen Fahrzeugen vorgesehen, welches wenigstens zwei miteinander gekoppelte erfindungsgemäße Steuergeräte umfasst.

Weiterhin ist gemäß der Erfindung ein Fahrzeug, insbesondere ein flugfähiges Fahrzeugs, vorgesehen, welches wenigstens eine Sensoreinrichtung und ein mit der wenigstens einen Sensoreinrichtung gekoppeltes erfindungsgemäßes Steuergerät umfasst.

Eine Idee der vorliegenden Erfindung ist es daher, technische Lösungen, insbesondere ein Verfahren sowie ein Steuergerät umfassend dieses Verfahren sowie ein System und ein Fahrzeug bereitzustellen, welche dazu geeignet sind, hochgradig automatisiertes, zielgerichtetes Verhalten zur Erfüllung von Missionszielen in komplexen Missionen mit dynamisch veränderlichen Randbedingungen für Teams aus unbemannten (oder teilweise auch bemannten) Systemen (Luft, Land, Marine oder domänenübergreifend [JADO] wie zum Beispiel Flugkörpern und UAS) zu ermöglichen.

Das Verfahren und die vorgestellten technischen Einheiten, welche dieses Verfahren verwenden und implementiert haben, sind geeignet, einen Deliberationsprozess bereitzustellen, der in der Lage ist, vorgegebene Missionsziele und Spielregeln von einem Operateur oder einer vergleichbaren Entscheidungsinstanz, beispielsweise auch eine zumindest teilweise Kl-gesteuerten Entscheidungsinstanz, entgegenzunehmen, um anschließend daraus ein in Echtzeit zielgerichtetes Verhalten zu generieren. Dabei wird ausgehend von zumindest einer Missionsspezifikation ein Verhalten so erzeugt, sodass die geltenden Spielregeln eingehalten werden und die Erfüllung der Missionsziele (oder auch nur ein Missionsziel) angestrebt werden.

Die beteiligten Steuergeräte, die auch als Steuereinheiten bezeichnet werden können und welche dieses Verfahren implementiert haben, sind in der Lage, miteinander zu kommunizieren.

Der implementierte OODA-Loop-Algorithmus berücksichtigt somit nicht nur die bereitgestellten Missionsspezifikationen und Spielregeln, sondern es werden stets aktuelle Informationen über alle in der Teilnehmerliste aufgeführte Teilnehmer für nachfolgende Steuerungen berücksichtigt, sodass beispielsweise aus einer anfänglich nur grob formulierten Missionsspezifikation während der Missionszielerreichung ein jeweils angepasstes spezifischeres Verhalten beziehungsweise damit zusammenhängende Steuerungsvorgänge der einzelnen Teilnehmer auf vorteilhafte Weise resultiert. Die Missionsspezifikationen (oder auch nur die eine Missionsspezifikation) können dabei während der Mission durch einen Operateur oder einer vergleichbaren höheren Entscheidungsinstanz interaktiv verändert werden.

Das Verfahren ermöglicht somit auf vorteilhafte Weise eine Entfaltung von zielgerichtetem Verhalten von Teams aus hochgradig automatisierten bzw. autonomen Systemen (zum Beispiel Flugkörpern beziehungsweise UAS). Es ist robust gegenüber Veränderungen von Missionszielen und/oder Spielregeln, einem möglichen Kontaktverlust zu einem Operateur oder einer vergleichbaren kontrollierenden Instanz (beispielsweise durch gestörte Funkverbindungen oder dergleichen), einem Verlust von Teilnehmern beziehungsweise Teammitgliedern sowie dem Hinzufügen von neuen Teammitgliedern.

Das Verhalten wird also kontinuierlich in Echtzeit in einem auch als Deliberationsprozess genannten Rechenverfahren generiert und an sich verändernde Situationen im Einsatzgebiet angepasst. Taktische Entscheidungen können implizit im kontinuierlichen Deliberationsprozess getroffen werden. Ein ansonsten nötiger Planungsprozess kann insofern innerhalb des erfindungsgemäßen Verfahrens durch Missionsspezifikationen und einen kontinuierlichen Deliberationsprozess ersetzt werden, sodass mit Vorteil jederzeit flexibel auf neu sich einstellende Situationen während einer Missionserfüllung reagiert werden kann. Zudem wird mittels des vorgestellten Verfahrens eine Mehrdeutigkeit von Interpretationen von Lagebildern genutzt. Insofern ist das Verfahren ausgelegt, mit Vorteil einen kontinuierlichen Deliberationsprozess zu generieren, sodass ein situationsangepasstes und zielgerichtetes Verhalten bewirkt werden kann. Dabei kann vorgesehen sein, dass das ausgewählte Verhalten eine *"least commitment"* Strategie (*least commitment* = geringstes Engagement) nutzt, um der Mehrdeutigkeit Rechnung zu tragen.

Die zuvor genannten Vorteile gelten, soweit übertragbar, auch für das offenbarte System, das offenbarte Steuergerät sowie für das offenbarte Fahrzeug.

Gemäß einer weiteren Ausführungsform der Erfindung ist vorgesehen, dass eine Wiederholung der letzten drei Verfahrensschritte in einem Intervall von 0,001 - 60 Sekunden, vorzugsweise von 0,009 - 50 Sekunden, vorzugsweise von 0,05 - 45 Sekunden, vorzugsweise von 0,5 - 30 Sekunden vorgesehen wird.

Eine schnelle Wiederholungsrate bezogen auf eine jeweilige Durchführung der letzten drei Verfahrensschritte begünstigt auf vorteilhafte Weise, dass jeweilige sich neu einstellende Situationen während einer aktiven Missionsdurchführung (nahezu unmittelbar) zu einer möglichen Neuausrichtung von Verhalten der Teilnehmer führt.

Die ausgewählten Intervalle können Bestandteile der Missionsspezifikationen sein oder auch dynamisch während der Missionen als Bestandteil des durchzuführenden Algorithmus vorgesehen sein. Die Möglichkeit, derart schnell auf sich verändernde Bedingungen einzugehen, indem etwa die Teilnehmer sich anders verhalten hinsichtlich ihrer Hauptbewegungsrichtung oder dergleichen, begünstigt eine effiziente und erfolgreiche Missionserfüllung und stellt somit einen unmittelbaren Vorteil dar. Alternativ beziehungsweise sinngemäß kann der Deliberationsprozess auf Echtzeitfähigkeit hin ausgelegt sein und beispielsweise so gestaltet sein, sodass innerhalb der charakteristischen Zeitkonstanten für die Dynamik der Mission immer die nächsten Schritte für die Erzeugung von zielgerichtetem Verhalten vorliegen. Für die Realisierung dieser Eigenschaften können beispielsweise unter anderem Anytime -Algorithmen eingesetzt werden, die zu jedem Zeitpunkt ein Ergebnis liefern, welches sich im Laufe der Zeit verbessert. Mit anderen Worten können die zuvor genannten unteren zeitlichen Grenzwerte auch im Sinne einer Echtzeitfähigkeit ausgelegt werden, ohne technische Einschränkungen oder gesonderte Anpassungen vornehmen zu müssen.

Gemäß einer weiteren Ausführungsform der Erfindung ist vorgesehen, dass die Ausgabe von jeweiligen aktuellen Steuerungssignalen an das Steuergerät und an alle gekoppelten Steuergeräte auf einem Bewertungsvorgang in dem OODA-Loop-Algorithmus zur optimalen Missionszielerreichung beruht.

So kann vorgesehen sein, dass eine Liste von möglichen Ausgaben berechnet wird, welche dann entsprechend bewertet werden. Somit kann je nach Vorgaben oder allgemein je nach standardisiertem Bewertungsvorgang sichergestellt werden, dass stets die vielversprechendste Ausgabe von jeweiligen aktuellen Steuerungssignalen an das Steuergerät und alle gekoppelten Steuergeräte erfolgt, sodass eine effiziente und erfolgreiche Missionserfüllung möglich ist.

Gemäß einer weiteren Ausführungsform der Erfindung ist vorgesehen, dass der Bewertungsvorgang auf einem Konsensvorgang zwischen den miteinander gekoppelten Steuergeräten basierend auf jeweils durchgeführte OODA-Loop-Algorithmen zur optimalen Missionszielerreichung in den jeweiligen Steuergeräten beruht.

Die beteiligten Steuergeräte können sich somit mittels des Konsensvorgangs untereinander auf gemeinsame Verhaltensweisen verständigen oder sie können teamorientierte Individualentscheidungen treffen, falls Kommunikationsverbindungen unterbrochen wurden. Die hierzu nötigen Entscheidungsprozesse, ähnlich einem Denkprozess, werden in dem Verfahren in dieser Ausführungsform, welche auch als digitaler Deliberationsprozess benannt werden kann, kontinuierlich in Echtzeit und in ständigen Wiederholungsschleifen ausgeführt.

Eine explizite Missionsplanung findet in dem Sinne also nicht mehr statt. Insofern findet nicht nur ein jeweiliger Rechenprozess in den jeweiligen Steuergeräten statt, sondern es wird zumindest in einem Steuergerät ein Bewertungsvorgang durchgeführt, welcher alle möglichen Ergebnisse von jeweiligen Ergebnissen aller OODA-Loop-Algorithmen zusammenführt. Ein Konsens kann etwa darin bestehen, dass alle OODA-Loop-Algorithmen zu gleichen Ergebnissen führen, sprich ein 100% Konsens besteht, sodass anschließend klar ist, welche Ausgaben an jeweiligen aktuellen Steuerungssignalen an das Steuergerät und alle gekoppelten Steuergeräte erfolgen muss. Falls jedoch a priori kein Konsens besteht, kann ein Konsens durch ein konvergierendes Konsens Verfahren hergestellt werden. Somit können auf vorteilhafte Weise alle ermittelten Informationen, sprich alle Sensordaten und damit zusammenhängende Berechnungen für eine effiziente und erfolgreiche Missionserfüllung verwendet werden. Auf diese Weise ist die Wahrscheinlichkeit einer Missionszielerreichung nochmal signifikant steigerbar.

Gemäß einer weiteren Ausführungsform der Erfindung ist vorgesehen, dass das Missionsziel von wenigstens einem Benutzer oder von einem in der Teilnehmerliste aufgeführtem hoch automatisiertem oder autonom agierendem Fahrzeug oder aufgrund von Ergebnisprozessen des OODA-Loop-Algorithmus veränderbar ist.

Die damit einhergehende Flexibilität, die durch diese Ausführungsform des Verfahrens ermöglicht wird, ermöglicht somit eine noch flexiblere Missionserfüllung, da auch übergeordnete Veränderungen von Randbedingungen, welche jenseits des Erfassungshorizonts der jeweiligen Sensorvorrichtungen liegt, mit in aktuelle Berechnungsvorgänge einfließen können.

Gemäß einer weiteren Ausführungsform der Erfindung ist vorgesehen, dass die zumindest eine Spielregel von wenigstens einem Benutzer oder von einem in der Teilnehmerliste aufgeführtem hoch automatisiertem oder autonom agierendem Fahrzeug oder aufgrund von Ergebnisprozessen des OODA-Loop-Algorithmus veränderbar ist.

Auch diese Ausführungsform des erfindungsgemäßen Verfahren ermöglicht somit eine flexible Anpassung mittels übergeordneter Vorgaben, welche dann in der Iteration der letzten drei Verfahrensschritte anschließend sofort berücksichtigt werden können. Eine Missionszielerreichung ist somit mit einer noch größeren Wahrscheinlichkeit erreichbar, da auf jegliche Änderung sofort reagiert werden kann.

Gemäß einer weiteren Ausführungsform der Erfindung ist vorgesehen, dass die Teilnehmerliste von Fahrzeugen während der Erfüllung eines Missionsziels hinsichtlich ihrer aktuellen Anzahl von Fahrzeugen flexibel anpassbar ist.

Auf diese Weise können Verluste an Fahrzeugen oder neu zustoßende Fahrzeuge sofort in aktuellen Berechnungen berücksichtigt werden, was mitunter zu drastisch sich verändernden Ausgaben von jeweiligen aktuellen Steuerungssignalen an das Steuergerät und alle gekoppelten Steuergeräte führen kann. Selbst bei sich verändernden Randbedingungen hinsichtlich einer Zusammensetzung von teilnehmenden Fahrzeugen für die Missionserreichung kann ein bestmöglicher Weg stets neu berechnet und umgesetzt werden.

Gemäß einer weiteren Ausführungsform der Erfindung ist vorgesehen, dass die Ausgabe und Ausführung von jeweiligen aktuellen Steuerungssignalen an das Steuergerät und an alle gekoppelten Steuergeräte von einem menschlichen Benutzer in Echtzeit korrigierbar sind.

Eine menschliche Kontrollinstanz kann eine Sicherheit des Verfahrens in dieser Ausführungsform bereitstellen, sodass im Falle einer bestehenden Kommunikationsverbindung auf vorteilhafte Weise stets die Möglichkeit gegeben ist, Fehlverhalten durch mögliche technische Defekte unmittelbar durch menschliche Interaktionen auszugleichen. Insbesondere wenn defekte Sensorvorrichtungen während der Missionserfüllung durch nicht gewollte externe Schadenseinwirkungen oder dergleichen auftreten, kann ein menschlicher Benutzer notfalls hier unmittelbar fehlende Informationen ausgleichen oder übersteuern.

Gemäß einer weiteren Ausführungsform der Erfindung ist vorgesehen, dass die Spielregeln ausgewählt sind aus:
Ein zuvor spezifiziertes Einsatzgebiet darf verlassen werden; ein zuvor spezifiziertes Einsatzgebiet darf nicht verlassen werden; breche die Mission ab, wenn die Kommunikationsverbindung unterbrochen wird; setze die Mission gemäß Missionsspezifikation fort, falls die Kommunikationsverbindung unterbrochen wird; ein Einsatz der Payload, muss von einem Operateur individuell bestätigt werden; ein Einsatz der Payload braucht nicht vom Operateur bestätigt zu werden; eine Aufgabe von einzelnen Missionszielen bei Nichterreichbarkeit muss vom Operateur bestätigt werden; eine Aufgabe von einzelnen Missionszielen bei Nichterreichbarkeit braucht nicht vom Operateur bestätigt werden.

Gemäß einer weiteren Ausführungsform der Erfindung ist vorgesehen, dass die Missionsspezifikation zumindest einen der folgenden Inhalte umfasst: : Daten zu einem zuvor festgelegtem Einsatzgebiet; Missionsziele; Autorisierungen; Fahrverbotszonen; Zustand des Fahrzeugverbands; Spezifische Fähigkeiten einzelner Fahrzeuge und/oder ihrer Payload; Verhaltensrichtlinien (Gebote und Verbote); Vorbedingungen für spezifische Handlungen; Kommunikationsrichtlinien; Missionsabbruchkriterien; Missionsabbruchplan.

Gemäß einer weiteren Ausführungsform der Erfindung ist vorgesehen, dass die Kommunikationsroutine auf zumindest einer Funktechnologie basiert. Auch ohne Sichtkontakt und/oder über längere Distanzen zwischen den Teilnehmern können somit nötige Kommunikationsroutinen zuverlässig mit Vorteil bereitgestellt werden. Der Begriff *"Funktechnologie"* umfasst im Zusammenhang mit der vorliegenden Erfindung auch jegliche gerichtete optische Kommunikationsverbindungen, welche vergleichbar zu Technologien im Zusammenhang mit jeglichen bekannten TV Fernbedienungen oder dergleichen sind und somit hierbei ebenfalls nutzbar sein können.

Gemäß einer weiteren Ausführungsform der Erfindung ist vorgesehen, dass das Fahrzeug und die in der Teilnehmerliste aufgelisteten Fahrzeuge ausgewählt sind aus: Bemanntes Flugfahrzeug, unbemanntes, ferngesteuertes Flugfahrzeug, hoch automatisiertes oder autonom agierendes Flugfahrzeug, bemanntes Kraftfahrzeug, unbemanntes, ferngesteuertes Kraftfahrzeug, hoch automatisiertes oder autonom agierendes Kraftfahrzeug, bemanntes Wasserfahrzeug, unbemanntes, ferngesteuertes Wasserfahrzeug, hoch automatisiertes oder autonom agierendes Wasserfahrzeug.

Jegliche Zusammensetzung von Fahrzeugverbänden können somit mit Vorteil das erfindungsgemäße Verfahren einsetzen, wobei sowohl vollautomatisierte Teams als auch jegliche Hybridlösungen mit menschlichen Akteuren in den Fahrzeugen möglich sind. Der Begriff *"Wasserfahrzeuge"* steht im Zusammenhang mit der vorliegenden Erfindung für jegliche Fahrzeuge welche sich im Wasser, auf dem Wasser oder unter der Wasseroberfläche fortbewegen können. Mit anderen Worte sind jegliche Schiffs- oder Bootstypen von diesem Begriff umfasst. Beispielsweise können damit auch jegliche Unterwasserfahrzeuge umfasst sein. Bei den Unterwasserfahrzeugen können beispielsweise auch AUV (*Autonomous Underwater Vehicle* = autonome Unterwasserfahrzeuge) sowie jegliche Hybridwasserfahrzeuge gemeint sein, welche sowohl an der Wasseroberfläche als auch zumindest teilweise unter der Wasseroberfläche eingesetzt werden können. Insofern können auch dauerhaft tauchende Wasserfahrzeuge umfasst sein, als auch Wasserfahrzeuge, welche nur für jeweils temporäre Unterwasserfahrten vorgesehen sind. Neben autonom oder hochautomatisierten Unterwasserbooten können auch Fahrzeuge gemeint sein, welche vom Land oder aus der Luft fahrend bzw. fliegend ins Wasser eintauchen und anschließend eine Unterwasserfahrt einleiten. Das erfindungsgemäße Verfahren kann insbesondere zusätzlich dann mit Vorteil bei jeglichen vorgestellten Fahrzeugen eingesetzt werden, wenn Funkverbindungen oder dergleichen nicht ausreichend oder allgemein nicht besonders gut realisiert werden können. Wenn beispielsweise bei Unterwasserfahrzeugen jeglicher Art, wie sie oben etwa beispielhaft vorgestellt sind, zunächst Glasfaserverbindungen abgerollt werden, um technische Verbindungen zu realisieren, kann es vorkommen, dass diese Verbindung im Verlauf einer Mission abbrechen, wobei ein Zeitpunkt einer solchen Unterbrechung nicht immer vorhergesehen werden kann. Auch nach solch einer Unterbrechung müssen beispielsweise AUV's hoch automatisiert oder autonom eine zuvor vorgegebene Mission weiterverfolgen können bzw. ihre Mission finalisieren können, wobei das vorgestellte erfindungsgemäße Verfahren mit Vorteil eingesetzt werden kann.

### KURZBESCHREIBUNG DER ZEICHNUNGEN

Im Folgenden wird die Erfindung unter Bezugnahme auf die Figuren der Zeichnungen erläutert. Von den Figuren zeigen:
- Fig. 1: ein schematisches Flussdiagramm für ein Verfahren zur Steuerung von Fahrzeugen, insbesondere flugfähigen Fahrzeugen, und Fahrzeugverbänden von solchen Fahrzeugen;
- Fig. 2: eine schematische Darstellung von einem Steuergerät zur Steuerung eines Fahrzeugs;
- Fig. 3: eine schematische Darstellung von einem System zur Steuerung von Fahrzeugen, insbesondere flugfähigen Fahrzeugen, und Fahrzeugverbänden von solchen Fahrzeugen;
- Fig. 4: eine schematische Darstellung von einem erfindungsgemäßen Fahrzeug.

In den Figuren bezeichnen dieselben Bezugszeichen gleiche oder funktionsgleiche Komponenten, soweit nichts Gegenteiliges angegeben ist.

### AUSFÜHRLICHE BESCHREIBUNG VON AUSFÜHRUNGSBEISPIELEN DER ERFINDUNG

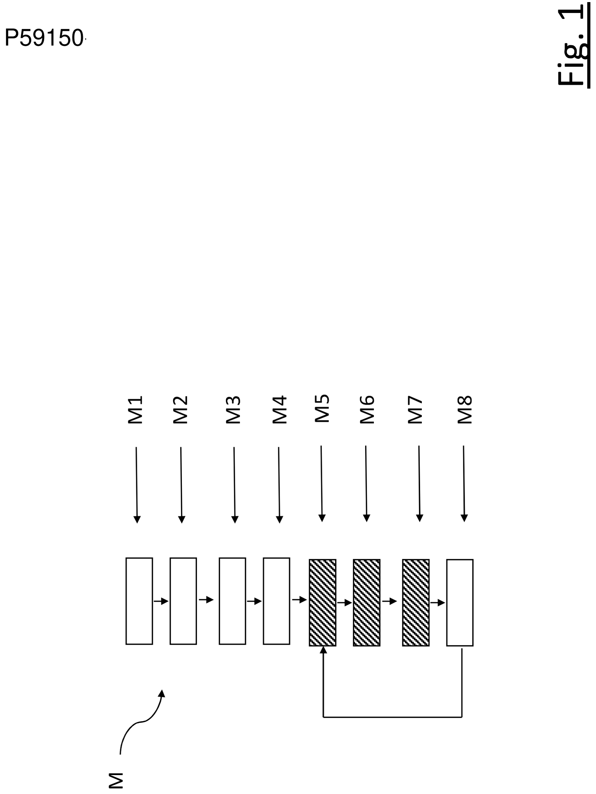

Fig. 1 zeigt ein schematisches Flussdiagramm für ein Verfahren M zur Steuerung von Fahrzeugen, insbesondere flugfähigen Fahrzeugen, und Fahrzeugverbänden von solchen Fahrzeugen. In einem ersten Verfahrensschritt M1 wird ein Steuergerät zur Steuerung eines Fahrzeugs, in welchem dieses Verfahren implementiert ist, gestartet.

In einem zweiten Verfahrensschritt M2 wird eine Missionsspezifikation mit zumindest einem Missionsziel, einer Teilnehmerliste von Fahrzeugen und von zumindest einer Spielregel zur Erfüllung des Missionsziel durch das Steuergerät entgegengenommen. In einem dritten Verfahrensschritt M3 wird das Fahrzeug, in welchem das Steuergerät implementiert ist, gestartet und es werden erste mittels des Steuergeräts ausgelöste Steuerungsabläufe zur Erfüllung des Missionsziels basierend auf der zumindest einen Missionsspezifikation des Missionsziels und der zumindest einen Spielregel gestartet. In einem vierten Verfahrensschritt M4 wird eine Kommunikationsroutine mit allen in der Teilnehmerliste gelisteten weiteren Steuergeräten von Fahrzeugen, in welchem dieses Verfahren ebenfalls vorhanden und aktiviert ist, aufgebaut.

In einem fünften Verfahrensschritt M5 werden Sensordaten von mit dem Steuergerät gekoppelten Sensoreinrichtungen des Fahrzeugs erhoben. In einem sechsten Verfahrensschritt M6 wird ein in dem Steuergerät implementierter OODA-Loop-Algorithmus zur optimalen Missionszielerreichung unter Berücksichtigung der erhobenen Sensordaten und von übermittelten Sensordaten aller in der Teilnehmerliste gelisteten weiteren und miteinander gekoppelten Steuergeräten von Fahrzeugen gestartet und ausgeführt. In einem siebten Verfahrensschritt M7 werden jeweilige aktuelle Steuerungssignale an das Steuergerät und an alle gekoppelten Steuergeräten basierend auf einem Ergebnisprozess des OODA-Loop-Algorithmus ausgegeben und ausgeführt, sodass alle in der Teilnehmerliste aufgeführte Fahrzeuge mittels ihres jeweiligen Steuergeräts einen optimierten Steuerungsablauf zur effizienteren Erfüllung des Missionsziel ausführen. In einem achten Verfahrensschritt M8 werden die letzten vorherigen drei Verfahrensschritte M5 - M7 wiederholt, bis das Missionsziel entweder erreicht wird oder von einem Operateur geändert wird oder sich als unerreichbar herausstellt.

In einem vorstellbarem Anwenderszenario ist das erfindungsgemäße Verfahren beispielsweise in einem Fluggeräteverband aktiv implementiert, wobei in dem Fluggeräteverband beispielsweise ein bemanntes Flugzeug und ansonsten eine Vielzahl von unbemannten Flugkörpern unterschiedlichster Ausprägung vorgesehen sind. In allen Fluggeräten sind Steuergeräte mit dem erfindungsgemäßen Verfahren vorgesehen. Das übertragene Missionsziel kann beispielsweise das bestimmungsgemäße Erreichen einer festen Koordinate umfassen und eine zugehörige Aktion, welche dort von dem Verband zu erreichen ist, wobei offen ist, welches Fluggerät letztendlich diese Aktion ausführen wird. Zunächst werden die einzelnen Fluggeräte gestartet, wobei in den jeweiligen Fluggeräten jeweilige Steuergeräte implementiert sind.

Es folgt, dass erste mittels der Steuergeräte ausgelöste Steuerungsabläufe zur Erfüllung des Missionsziels basierend auf der zumindest einen Missionsspezifikation des Missionsziels und der zumindest einen Spielregel ablaufen. Insofern werden sich die einzelnen Fluggeräte in Richtung Ziel bewegen, wobei noch offenbleibt, welche genauen Abläufe nachfolgend geschehen werden und vor allem bleibt offen, welches Fluggerät letztendlich die finale Aktion ausführen wird. Nach dem Start erfolgt der Kommunikationsaufbau und der Verband ist nunmehr vernetzt. In einer Basisvariante des erfindungsgemäßen Verfahrens wird ein Steuergerät als führendes Element alle nötigen Informationen erhalten, sprich die jeweils aktuellen Sensordaten aller Teilenehmer, um anschließend kontinuierlich in Echtzeit die jeweils bestmögliche Steuerung des Verbands für eine optimale und besonders effiziente Missionserfüllung zu bewirken. Mit anderen Worten werden bis zur Erreichung des vorgegebenen Missionsziel immer wieder Erfassung von allen Sensordaten in einem Steuergerät derart verarbeitet, sodass jeweils die bestmögliche Handlungsoptionen der einzelnen Teilnehmer bewirkt wird.

In einer weiteren nicht näher dargestellten Ausführungsform ist jedoch vorstellbar, dass die Ausgabe von jeweiligen aktuellen Steuerungssignalen an das Steuergerät und alle gekoppelten Steuergeräte auf einem Bewertungsvorgang in dem OODA-Loop-Algorithmus zur optimalen Missionszielerreichung beruht. Der Bewertungsvorgang kann in jedem einzelnen Fahrzeug für sich erfolgen und wird dann beispielsweise durch einen Konsensvorgang zwischen den miteinander gekoppelten Steuergeräten konsolidiert.

Anders gesagt, führt jede Einheit in dem Verbund eigene Berechnungen durch, welche dann miteinander verglichen beziehungsweise gemeinsam bewertet werden. Wenn beispielsweise eine Mehrheit eine gleiche Ausgabe favorisiert, kann vorgesehen sein, dass dieser größtmögliche Konsens unmittelbar in die Tat umgesetzt wird und entsprechende Ausgaben erfolgen. Auch ist vorstellbar, dass eine nachfolgende Ausgabe nur bei einem einstimmigen Konsens erfolgen soll. Das Verfahren kann an dieser Stelle mit Vorteil benutzerdefiniert anpassbar vorgesehen sein. Die einzige Voraussetzung ist beispielsweise, dass der Konsensalgorithmus zügig konvergiert.

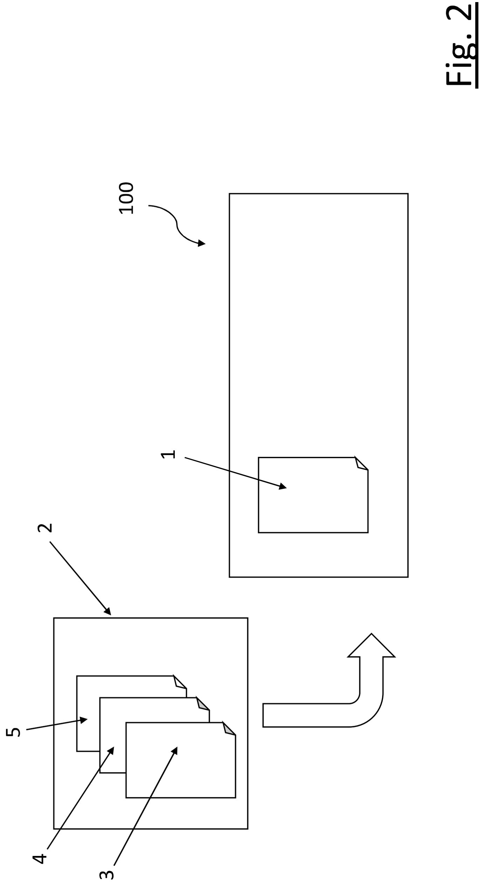

Fig. 2 zeigt eine schematische Darstellung von einem Steuergerät 100 zur Steuerung eines Fahrzeugs. Dieses Steuergerät 100 ist dabei mit einem OODA-Loop-Algorithmus 1 zur optimalen Missionszielerreichung ausgestattet dargestellt. Das Steuergerät 100 erhält dabei von einem nicht näher dargestellten externem Gerät oder einem menschlichen Operateur eine Missionsspezifikation 3 mit zumindest einem Missionsziel 2 , einer Teilnehmerliste 4 von Fahrzeugen und von zumindest einer Spielregel 5 zur Erfüllung des Missionsziels 1 durch das Steuergerät 100.

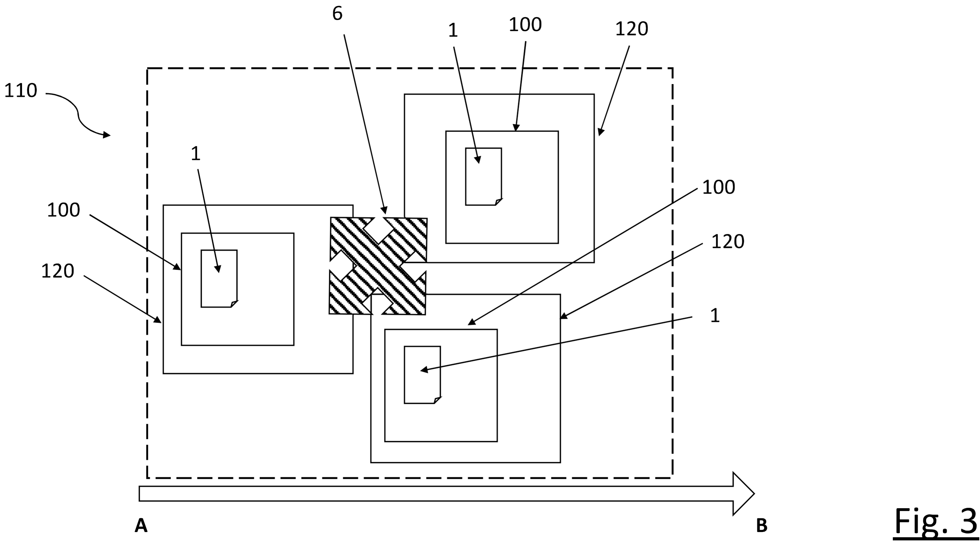

Fig. 3 zeigt eine schematische Darstellung von einem System 110 zur Steuerung von Fahrzeugen 120, insbesondere flugfähigen Fahrzeugen, und Fahrzeugverbänden von solchen Fahrzeugen 120. Die einzelnen Fahrzeuge 120 in diesem System 110 sind stark vereinfacht dargestellt. Sie können dabei jeweils beispielsweise jegliche der folgenden Ausführungen darstellen: Bemanntes Flugfahrzeug, unbemanntes, ferngesteuertes Flugfahrzeug, hoch automatisiertes oder autonom agierendes Flugfahrzeug, bemanntes Kraftfahrzeug, unbemanntes, ferngesteuertes Kraftfahrzeug, hoch automatisiertes oder autonom agierendes Kraftfahrzeug, bemanntes Wasserfahrzeug, unbemanntes, ferngesteuertes Wasserfahrzeug, hoch automatisiertes oder autonom agierendes Wasserfahrzeug. Ein dargestelltes Kreuzsymbol 6 verdeutlicht, dass jeweilige Steuergeräte 100 von den Fahrzeugen 120 miteinander vernetzt sind.

Anders gesagt, wurde bereits eine Kommunikationsroutine zwischen ihnen etabliert. Diese Kommunikationsroutine kann beispielsweise mittels jeglicher Funktechnologie vorgesehen sein. Auch können mehrere Funktechnologien vorgesehen sein, sodass bei Bedarf jeder Zeit gewechselt werden könnte. Die in den Steuergeräten 100 ablaufenden OODA-Loop-Algorithmen 1 können so miteinander vernetzt vorgesehen sein, sodass jeweils die bestmögliche Ausgabe von jeweiligen aktuellen Steuerungssignalen an das Steuergerät 100 und an alle gekoppelten Steuergeräte 100 bewirkt werden kann, sodass anschließend oder sogar in Echtzeit sofort ein neues Verhalten des Systems 110 bewirkt wird. Dieses neue Verhalten kann sich beispielsweise in einer gemeinsamen Neuausrichtung der sich bewegenden Fahrzeuge 120 darstellen, wobei in Fig. 3 unten (bezogen auf die Bildebene) ein Blockpfeil von A nach B diesen Umstand illustriert. Auch können individuelle Kurskorrekturen jeweilige Fahrzeuge 120 jeweils in andere Richtungen steuern lassen.

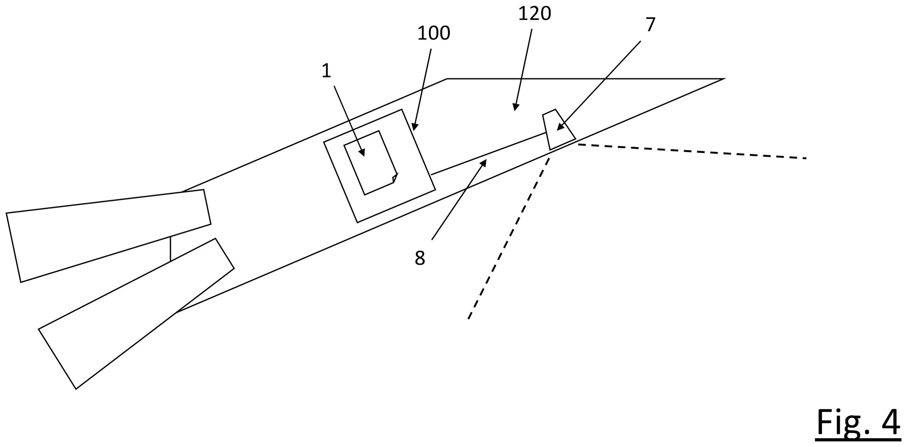

Fig. 4 zeigt eine schematische Darstellung von einem erfindungsgemäßen Fahrzeug 120. In dieser besonderen Darstellung von Fig. 4 handelt es sich dabei um ein flugfähiges, unbemanntes Fahrzeug, welches eine Sensoreinrichtung 7 und ein mit dieser Sensoreinrichtung 7 gekoppeltes erfindungsgemäßes Steuergerät 100 umfasst. Dieses Steuergerät 100 ist dabei mit einem OODA-Loop-Algorithmus 1 zur optimalen Missionszielerreichung ausgestattet dargestellt.

In einer nicht näher dargestellten Ausführungsform ist vorstellbar, dass mehr als eine Sensorvorrichtung 7 vorgesehen ist.

In diesem Ausführungsbeispiel kann es sich etwa um eine Sensorvorrichtung 7 handeln, welche Informationen über eine nicht näher dargestellte Umgebung erhebt. Gestrichelte Linien deuten diesen Umstand in der Fig. 4 an. Die Sensorvorrichtung 7 ist mittels einer ersten Verbindungsleitung 8 mit dem Steuergerät 100 gekoppelt dargestellt. Der in dem Steuergerät 100 implementierte OODA-Loop-Algorithmus 1 kann nunmehr unter Berücksichtigung der erhobenen Sensordaten von der Sensorvorrichtung 7 Berechnungen durchführen, sodass dann eine Ausgabe von jeweiligen aktuellen Steuerungssignalen an das Steuergerät 100 basierend auf einem Ergebnisprozess des OODA-Loop-Algorithmus 1 erfolgen kann, sodass das Fahrzeug 120 einen optimierten Steuerungsablauf zur effizienteren Erfüllung des Missionsziels 2 ausführt. Insofern ist das Fahrzeug 120 mittels des sich ständig neu ausrichtenden Steuergeräts 100 optimal steuerbar, sodass auch ohne einen anfänglichen vorliegendem vollständigen Missionsplan ein optimales Verhalten bewirkt werden kann, welches sich auf jede neu detektierte Situation optimal ausrichtet.

### BEZUGSZEICHENLISTE

- 1: OODA-Loop-Algorithmus
- 2: Missionsziel
- 3: Missionsspezifikation
- 4: Teilnehmerliste
- 5: Spielregel
- 6: Kreuzsymbol
- 7: Sensoreinrichtung
- 8: erste Verbindungsleitung
- 100: Steuergerät zur Steuerung eines Fahrzeugs
- 110: System zur Steuerung von Fahrzeugen, insbesondere flugfähigen Fahrzeugen, und Fahrzeugverbänden von solchen Fahrzeugen.
- 120: Fahrzeug
- M: Verfahren zur Steuerung von Fahrzeugen, insbesondere flugfähigen Fahrzeugen, und Fahrzeugverbänden von solchen Fahrzeugen
- M1: erster Verfahrensschritt
- M2: zweiter Verfahrensschritt
- M3: dritter Verfahrensschritt
- M4: vierter Verfahrensschritt
- M5: fünfter Verfahrensschritt
- M6: sechster Verfahrensschritt
- M7: siebter Verfahrensschritt
- M8: achter Verfahrensschritt

## Patentansprüche

1. Verfahren (M) zur Steuerung von Fahrzeugen, insbesondere flugfähigen Fahrzeugen, und Fahrzeugverbänden von solchen Fahrzeugen umfassend:
• Starten eines Steuergeräts (100) zur Steuerung eines Fahrzeugs (120), in welchem dieses Verfahren implementiert ist;
• Entgegennahme von einer Missionsspezifikation (3) mit zumindest einem Missionsziel (2), einer Teilnehmerliste (4) von Fahrzeugen (120) und von zumindest einer Spielregel (5) zur Erfüllung des Missionsziels (2) durch das Steuergerät (100);
• Starten des Fahrzeugs (120), in welchem das Steuergerät (100) implementiert ist, und Starten erster mittels des Steuergeräts (100) ausgelöster Steuerungsabläufe zur Erfüllung des Missionsziels (2) basierend auf der zumindest einen Missionsspezifikation (3) des Missionsziels (2) und der zumindest einen Spielregel (5);
• Aufbau einer Kommunikationsroutine mit allen in der Teilnehmerliste (4) gelisteten weiteren Steuergeräten (100) von Fahrzeugen (120), in welchem dieses Verfahren (M) ebenfalls vorhanden und aktiviert ist;
• Erhebung von Sensordaten von mit dem Steuergerät (100) gekoppelten Sensoreinrichtungen des Fahrzeugs (120);
• Starten und Ausführen eines in dem Steuergerät (100) implementierten OODA-Loop-Algorithmus (1) zur optimalen Missionszielerreichung unter Berücksichtigung der erhobenen Sensordaten und von übermittelten Sensordaten aller in der Teilnehmerliste (4) gelisteten weiteren und miteinander gekoppelten Steuergeräten (100) von Fahrzeugen (120);
• Ausgabe und Ausführung von jeweiligen aktuellen Steuerungssignalen an das Steuergerät (100) und an alle gekoppelten Steuergeräte (100) basierend auf einem Ergebnisprozess des OODA-Loop-Algorithmus (1), sodass alle in der Teilnehmerliste (4) aufgeführte Fahrzeuge (120) mittels ihres jeweiligen Steuergeräts (100) einen Steuerungsablauf zur effizienteren Erfüllung des Missionsziels (2) ausführen;
• Wiederholen der letzten vorherigen drei Verfahrensschritte bis das Missionsziel (2) entweder erreicht wird oder von einem Operateur geändert wird oder sich als unerreichbar herausstellt.

2. Verfahren (M) gemäß Anspruch 1, wobei eine Wiederholung der letzten drei Verfahrensschritte in einem Intervall von 0,001 - 60 Sekunden, vorzugsweise von 0,009 - 50 Sekunden, vorzugsweise von 0,05 - 45 Sekunden, vorzugsweise von 0,5 - 30 Sekunden vorgesehen wird.

3. Verfahren (M) gemäß einem der vorherigen Ansprüche, wobei die Ausgabe von jeweiligen aktuellen Steuerungssignalen an das Steuergerät (100) und alle gekoppelten Steuergeräte (100) auf einem Bewertungsvorgang in dem OODA-Loop-Algorithmus (1) zur optimalen Missionszielerreichung beruht.

4. Verfahren (M) gemäß Anspruch 3, wobei der Bewertungsvorgang auf einem Konsensvorgang zwischen den miteinander gekoppelten Steuergeräten (100) basierend auf jeweils durchgeführten OODA-Loop-Algorithmen (1) zur optimalen Missionszielerreichung in den jeweiligen Steuergeräten (100) beruht.

5. Verfahren (M) gemäß einem der vorherigen Ansprüche, wobei das Missionsziel (2) von wenigstens einem Benutzer oder von einem in der Teilnehmerliste (4) aufgeführtem hoch automatisiertem oder autonom agierendem Fahrzeug (120) oder aufgrund von Ergebnisprozessen des OODA-Loop-Algorithmus (1) veränderbar ist.

6. Verfahren (M) gemäß einem der vorherigen Ansprüche, wobei die zumindest eine Spielregel von wenigstens einem Benutzer oder von einem in der Teilnehmerliste (4) aufgeführtem hoch automatisiertem oder autonom agierendem Fahrzeug (120) oder aufgrund von Ergebnisprozessen des OODA-Loop-Algorithmus (1) veränderbar ist.

7. Verfahren (M) gemäß einem der vorherigen Ansprüche, wobei die Teilnehmerliste (4) von Fahrzeugen während der Erfüllung eines Missionsziels (2) hinsichtlich ihrer aktuellen Anzahl von Fahrzeugen flexibel anpassbar ist.

8. Verfahren (M) gemäß einem der vorherigen Ansprüche, wobei die Ausgabe und Ausführung von jeweiligen aktuellen Steuerungssignalen an das Steuergerät (100) und an alle gekoppelte Steuergeräte von einem menschlichen Benutzer in Echtzeit korrigierbar sind.

9. Verfahren (M) gemäß einem der vorherigen Ansprüche, wobei die Spielregeln (5) ausgewählt sind aus:
• Ein zuvor spezifiziertes Einsatzgebiet darf verlassen werden;
• Ein zuvor spezifiziertes Einsatzgebiet darf nicht verlassen werden;
• Breche die Mission ab, wenn die Kommunikationsverbindung unterbrochen wird;
• Setze die Mission gemäß Missionsspezifikation fort, falls die Kommunikationsverbindung unterbrochen wird;
• Ein Einsatz der Payload, muss von einem Operateur individuell bestätigt werden;
• Ein Einsatz der Payload braucht nicht vom Operateur bestätigt zu werden;
• Eine Aufgabe von einzelnen Missionszielen bei Nichterreichbarkeit muss vom Operateur bestätigt werden;
• Eine Aufgabe von einzelnen Missionszielen bei Nichterreichbarkeit braucht nicht vom Operateur bestätigt werden.

10. Verfahren (M) gemäß einem der vorherigen Ansprüche, wobei die Missionsspezifikation (3) zumindest einen der folgenden Inhalte umfasst:
• Daten zu einem zuvor festgelegtem Einsatzgebiet;
• Missionsziele;
• Autorisierungen;
• Fahrverbotszonen;
• Zustand des Fahrzeugverbands;
• Spezifische Fähigkeiten einzelner Fahrzeuge und/oder ihrer Payload;
• Verhaltensrichtlinien (Gebote und Verbote);
• Vorbedingungen für spezifische Handlungen;
• Kommunikationsrichtlinien;
• Missionsabbruchkriterien;
• Missionsabbruchplan.

11. Verfahren (M) gemäß einem der vorherigen Ansprüche, wobei die Kommunikationsroutine auf zumindest einer Funktechnologie basiert.

12. Verfahren (M) gemäß einem der vorherigen Ansprüche, wobei das Fahrzeug (120) und die in der Teilnehmerliste (4) aufgelisteten Fahrzeuge ausgewählt sind aus: Bemanntes Flugfahrzeug, unbemanntes, ferngesteuertes Flugfahrzeug, hoch automatisierts oder autonom agierendes Flugfahrzeug, bemanntes Kraftfahrzeug, unbemanntes, ferngesteuertes Kraftfahrzeug, hoch automatisiertes oder autonom agierendes Kraftfahrzeug, bemanntes Wasserfahrzeug, unbemanntes, ferngesteuertes Wasserfahrzeug, hoch automatisiertes oder autonom agierendes Wasserfahrzeug.

13. Steuergerät (100) zur Steuerung eines Fahrzeugs (120), in welchem das Verfahren (M) gemäß Ansprüchen 1 bis 12 implementiert ist, wobei in dem Steuergerät (100) zumindest ein OODA-Loop-Algorithmus (1) zur optimalen Missionszielerreichung implementiert ist.

14. System (110) zur Steuerung von Fahrzeugen (120), insbesondere von flugfähigen Fahrzeugen, und Fahrzeugverbänden von solchen Fahrzeugen (120) umfassend wenigstens zwei miteinander gekoppelte Steuergeräte (100) gemäß Anspruch 13.

15. Fahrzeug (120), insbesondere flugfähiges Fahrzeugs, umfassend wenigstens eine Sensoreinrichtung (7) und ein mit der wenigstens einen Sensoreinrichtung (7) gekoppeltes Steuergerät (100) gemäß Anspruch 13.
